# EUROPÄISCHE PATENTSCHRIFT

(11) **EP 3 947 278 B1**
(45) Veröffentlichungstag und Bekanntmachung des Hinweises auf die Patenterteilung: **16.11.2022**
(21) Anmeldenummer: 19715473.5
(22) Anmeldetag: 03.04.2019
(51) Int. Cl.: C01B 33/02

(54) **VERFAHREN ZUR HERSTELLUNG VON SILICIUMMETALL-HALTIGEN AGGLOMERATEN**
METHOD FOR PREPARING AGGLOMERATES COMPRISING METALLIC SILIKON
PROCÉDÉ DE PRÉPARATION D'AGGLOMERATS CONTENANT DU SILICIUM MÉTALLIQUE

(43) Veröffentlichungstag der Anmeldung: 09.02.2022
(73) Patentinhaber: Wacker Chemie AG, 81737 München (DE)
(72) Erfinder: RIMBÖCK, Karl-Heinz, 84431 Heldenstein (DE); MAUTNER, Konrad, 84489 Burghausen (DE)
(74) Vertreter: Fritz, Helmut
(86) Internationale Anmeldenummer: PCT/EP2019/058387
(87) Internationale Veröffentlichungsnummer: WO 2020/200440

(56) Entgegenhaltungen:
- EP-A1- 3 100 979
- WO-A1-2010/003455
- DE-A1- 1 963 127
- DE-A1-102009 020 143

## Beschreibung

Die Erfindung betrifft ein Verfahren zur Herstellung von Siliciummetall-enthaltenden Agglomeraten aus feinteiligen Siliciummetall-haltigen Partikeln und einem Siliciumdioxid enthaltenden Bindemittel.

Die Silicium-herstellenden und/oder -verarbeitenden Industrien erzeugen große Mengen an Silicium-haltigen Ab- und/oder Nebenanfällen, die für den jeweiligen Produzenten mit teils hohen Kosten für Verbringung oder Entsorgung verbunden sind. Hierdurch gehen erhebliche Mengen metallischen Siliciums verloren.

Um dieses Silicium im Sinne der Kreislaufwirtschaft zurück in die Wertschöpfungskette zu bringen, sind bereits einige Verfahren beschrieben. Für Anwendungen dieses recycelten Siliciums in industriellen Prozessen muss das recycelte Silicium-haltige Material bestimmte physikalische, chemische und/oder metallurgische Kriterien erfüllen. Eines dieser Kriterien ist die Stück- bzw. Partikelgröße des Silicium-haltigen Materials. Ein Großteil des zu recycelnden oder bereits recycelten metallischen Siliciums fällt als feinteilige Partikelmischung (d₅₀ < 100 µm) an, was mit erheblichen Nachteilen einhergehen (bspw. Sicherheitsthematik [Staubexplosion]) oder einen Einsatz in bestimmten Prozessen unmöglich machen kann (bspw. Austrag aus Reaktionszone durch Abgasstrom wegen zu kleinen Partikelgrößen). Es ist daher von Vorteil, derartige feinteilige, Siliciummetall-enthaltende Partikelmischungen einem Agglomerationsprozess zu unterziehen. Die Agglomeration ist ein Prozess der mechanischen Kornvergrößerung. Die entsprechenden Produkte dieses Prozesses werden als Agglomerate bezeichnet, unter denen Mehrkörpersysteme verfestigter Partikel zu verstehen sind. Für ein zu agglomerierendes Gut kommen dabei prinzipiell drei Verfahren in Frage:
- Sintern
- Pressagglomeration (Brikettieren, Tablettieren)
- Aufbauagglomeration (Pelletieren)

Vorteile von Agglomeraten gegenüber feinteiligem Partikelmischungen sind im Allgemeinen: höhere Schüttdichte, definierte Partikelgrößenverteilungen herstellbar, besseres Fließ- und Dosierverhalten, Vermeidung/Reduktion von Staubbelastungen und damit einhergehendem Materialverlust, etc. Hierdurch können verfahrenstechnische Probleme vermieden werden, wie bspw. Zeitverfestigung und Entmischung von Schüttgütern.

DE102009020143 A1 offenbart ein Verfahren zur Aufarbeitung von Sägeabfallen aus der Wafer-Herstellung. In diesem Fall werden Silicium und organische Verbindungen enthaltende Sägeabfälle auf einem Granulierteller granuliert und sollen so für den weiteren Einsatz in der Chlorsilan-Herstellung vorbereitet werden. Bei diesem Verfahren ist nachteilig, dass die aus dem kristallinen Material hergestellten Granulate mechanisch nur wenig stabil sind und schnell wieder zerfallen. Es wird nur allgemein beschrieben, dass ein anorganisches Bindemittel zugesetzt wird, um ein stabileres Granulat zu erhalten.

In der US9228246B ist ein Verfahren offenbart, das Abfälle, enthaltend Silicium und Siliciumcarbid, teilweise entwässert und nach Zugabe eines Bindemittels agglomeriert und pelletiert. Als Bindemittel werden neben Polyvinylalkoholen, Polyethylenglykolen, Molassen und Natriumsilikaten bevorzugt Ligninsulfonate eingesetzt. Am Verfahren nachteilig sind die hohen Anteile an organischen Verbindungen und funktionellen Gruppen sowie der Tatsache, dass das Verfahren nicht zu gewünschten Eigenschaften der Partikelmischungen für metallurgische Prozesse führt.

EP3100979 A1 beansprucht ein Verfahren zur Aufbereitung feinteiliger Feststoffe bei der Herstellung von Chlorsilanen, das dadurch gekennzeichnet ist, dass die feinteiligen Feststoffe während einer Zeitdauer von 1 min bis 24 h auf einer Temperatur von 25 bis 2500 °C gehalten werden, wobei eine Agglomeration durch Sintern und/oder Schmelzen der feinen Partikel im Volumen der feinteiligen Feststoffe eintritt. Hierbei wird ein optionaler Zusatz von anorganischen Bindemitteln beschrieben, um die nachteilige Eigenschaft der erfindungsgemäß erhaltenen Körper, Chlorwasserstoff freizusetzen, wenigstens teilweise aufzuheben. Nachteilig an dem Verfahren ist der hohe Energieaufwand, der zum Sintern und/oder Schmelzen der beschriebenen Feststoffe betrieben werden muss.

Ein Verfahren zur Aufbereitung feinteiliger Feststoffe bei der Herstellung von Chlorsilanen, wobei die feinteiligen Feststoffe zu Körpern erhöhter Dichte hydraulisch gepresst werden, die feinteiligen Feststoffe durch Entzug von Wärmeenergie vereist oder durch Zufuhr von Wärmeenergie agglomeriert werden, ist in der EP3100978 A1 beschrieben. Nach Aufwenden eines Pressdrucks von maximal 14 kN/cm² kann durch Vereisung bei bis zu -150 °C oder durch Sintern/Schmelzen bei bis zu 1400 °C die Stabilität des Agglomerats erhöht werden. Es wird nicht quantifiziert, wie stabil die nach hydraulischem Pressen erhaltenen Presslinge sind. Der Energieaufwand, um mittels Vereisung oder Sintern/Schmelzen eine erhöhte Stabilität der Feststoffe zu erreichen, ist ebenfalls nachteilig.

WO2010/003455 A1 offenbart ein Verfahren, bei dem Siliciumdioxid mit 2 g Wasser gemischt werden und die so erhaltene Lösung bis zu einer Stunde gerührt wird. Dann wird Siliciumpulver zu der Vormischung gegeben und unter Rühren gehalten. Die so erhaltene Dispersion wird dann in eine Form gegossen. Der gesamte Prozess wird unter Stickstoff durchgeführt. Vor Beginn der Trocknungsphase wird die Probe zur Verfestigung des Grünkörpers in einem verschlossenen Behälter bei Raumtemperatur aufbewahrt. Der Silikonkörper wird dann 3 Tage unter einer belüfteten Haube getrocknet. Als Ausgangsmaterial kann Silizium verwendet werden, das beim Schneiden, Schneiden und Sägen von Siliziumwafern anfällt.

Gemäß DE102009020143 A1 werden Siliciummetall Abfälle, die Si, SiC und Fe enthalten, zu einer festen Trockenmasse komprimiert und dann granuliert, so dass dann Agglomerate vorliegen.

DE1963127 A1 beschreibt ein Verfahren zum Agglomerieren von Erzkonzentrat, bei dem ein feinteiliges Bindemittel eingesetzt wird. Das Bindemittel, Kieselerde, sollte pro Gramm eine Oberfläche von mehr als 3000 cm² mit einer Teilchengrösse von kleiner 60 micrometer aufweisen.

Der vorliegenden Erfindung lag somit die Aufgabe zugrunde, ein Verfahren bereitzustellen, das eine Agglomeration von feinteiligen Siliciummetall-haltigen Partikelmischungen ermöglicht, ohne die aus dem Stand der Technik bekannten Nachteile zu zeigen.

Gegenstand der Erfindung ist ein Verfahren zur Herstellung von Siliciummetall-enthaltenden Agglomeraten, bei dem eine Mischung aus feinteiligen Siliciummetall-haltigen Partikeln, die einen Partikelgrößenparameter d₅₀ von höchstens 250 µm und im trockenen Zustand einen Siliciummetall-Gehalt von mindestens 10 Masse-% aufweisen,
Bindemittel, das 90 bis 98 Masse-% Siliciumdioxid enthält, sowie eine spezifische Oberfläche von 15 bis 35 m²/g aufweist und
Wasser,
wobei das Massenverhältnis zwischen feinteiligen Siliciummetall-haltigen Partikeln und Bindemittel in der Mischung von 80/20 bis 99/1 beträgt,
agglomeriert wird,
wobei die hierbei erhaltenen feuchten Agglomerate einen Wasser-Gehalt von 5 bis 15 Masse-% aufweisen,
und die Agglomerate anschließend getrocknet werden.

Überraschenderweise wurde gefunden, dass sich durch das erfindungsgemäße Verfahren Agglomerate herstellen lassen, die sich insbesondere für den Einsatz in metallurgischen Prozessen eignen und die neben den voran beschriebenen, allgemeinen Vorteilen von Partikelmischungen von Agglomeraten gegenüber den entsprechenden feinteiligen Partikelmischungen weitere Vorzüge aufzeigen. Durch die speziellen Herstellungsbedingungen und Bindemitteleigenschaften werden bestimmte Materialeigenschaften der erfindungsgemäß hergestellten Agglomerate wie eine regelmäßige Form, eine definierte Porosität und eine einstellbare innere Oberfläche ermöglicht. Zudem zeigen die Agglomerate höhere Festigkeiten im Vergleich zu jenen aus bekannten Verfahren. In metallurgischen Prozessen sind die eingesetzten Materialien mehrmalig verschiedenen Belastungen unterworfen. Daher ist die Festigkeit dieser Materialien von besonderer Bedeutung.

Vorzugsweise weisen die eingesetzten feinteiligen Siliciummetall-haltigen Partikel eine mittlere Partikelgröße d₅₀ von 0,1 bis 150 mm, besonders bevorzugt von 0,5 bis 100 mm, ganz besonders bevorzugt von 1 bis 50 mm, insbesondere von 5 bis 30 mm auf.

Vorzugsweise weisen die feinteiligen Siliciummetall-haltigen Partikel eine spezifische Oberfläche von 20 bis 30 m²/g auf.

Die Siliciummetall-haltigen Partikel enthalten im trockenen Zustand bevorzugt mindestens 20 Masse-%, besonders bevorzugt mindestens 30 Masse-%, ganz besonders bevorzugt mindestens 40 Masse-%, insbesondere mindestens 45 Masse-% metallisches Silicium.

Vorzugsweise handelt es sich bei dem Siliciummetall-haltigen Partikeln um Siliciumreste, die vorzugsweise ausgewählt werden aus Nebenprodukten oder Abfällen, der Silicium-herstellenden oder -verarbeitenden Industrien, z.B.
- die bei der Herstellung oder bei der mechanischen Bearbeitung von Silicium, wie poly-, multi- oder einkristallinem Silicium anfallen;
- die bei der Herstellung von granuliertem Siliciummetall beispielsweise in Wirbelschicht-, Zentrifugal-, Gaszerstäubungs-, Wassergranulat-Verfahren anfallen;
- die bei der Herstellung von Silicium technischer Qualität mittels carbothermischer Reduktion von SiO₂ anfallen;
- die bei der mechanischen Bearbeitung und gegebenenfalls einem oder mehreren Klassierungsverfahren von Silicium technischer Qualität anfallen. Bei der mechanischen Bearbeitung kann es sich insbesondere um Brechen und/oder Mahlen handeln. Typische Klassierungsverfahren sind beispielsweise Sieben und/oder Sichten;
- die bei der Herstellung von Silanen anfallen. Beispielsweise kann es sich hierbei um neutralisierte Kontaktmasse aus Chlorsilanreaktoren handeln, vor und/oder nach einer Rückgewinnung von Cu; insbesondere der Prozesse Müller-Rochow Direktsynthese, Hydrochlorierung oder Niedertemperaturkonvertierung von Silanen.

Eine Aufreinigung dieser Siliciummetall-haltigen Partikel vor dem Einsatz im erfindungsgemäßen Verfahren ist üblicherweise nicht erforderlich, d.h. die Siliciummetall-haltigen Partikel können ohne weitere Reinigungsschritte verwendet werden.

Gemäß einer bevorzugten Ausführungsform umfasst das Bindemittel mit einem Gewichtsanteil von 2 bis 10 Masse-%, bezogen auf das Gesamtgewicht des Bindemittels, zumindest eine Verbindung ausgewählt aus der Gruppe Al₂O₃, Fe₂O₃, CaO, MgO, Na₂O, K₂O, Cl, C, P₂O₅, SO₃, H₂O oder Kombinationen daraus.

Das Bindemittel enthält vorzugsweise mindestens 92 Masse-%, besonders bevorzugt mindestens 93 Masse-%, insbesondere mindestens 95 Masse-% Siliciumdioxid.

Das Bindemittel weist vorzugsweise eine spezifische Oberfläche von 20 bis 30 m²/g auf. Das Bindemittel weist vorzugsweise einen LOI (loss on ignition, messbar nach NS-EN 196-2:2013) von 1 bis 5 Masse-%, insbesondere 2 bis 4 Masse-% auf.

In einer bevorzugten Ausführungsform handelt es sich bei dem Bindemittel um sogenanntes Microsilica, welches als Nebenprodukt bei der Herstellung von Silicium technischer Qualität mittels carbothermischer Reduktion von Siliciumdioxid bei hohen Temperaturen (ca. 2000 °C) in elektrischen Öfen (z.B. Lichtbogenreduktionsofen) anfällt.

Silicium technischer Qualität enthält <99,9 Masse-% Si. Zur Bestimmung werden 100 Masse-% angenommen, abzüglich der Gewichtsanteile von möglichen Begleitelementen ausgewählt aus der Gruppe Fe, Ca, Al, Ti, Cu, Mn, Cr, V, Ni, Mg, Co, W, Mo, As, Sb, Bi, S, Se, Te, Zr, Ge, Sn, Pb, Zn, Cd, Sr, Ba, Y, B, C, P und O.

Vorzugsweise beträgt das Massenverhältnis zwischen feinteiligen Siliciummetall-haltigen Partikeln und Bindemittel in der Mischung von 85/15 bis 95/5, insbesondere von 88/12 bis 93/7.

Beim erfindungsgemäßen Verfahren handelt es sich um eine Aufbauagglomeration. Die Agglomeration kann mittels Pelletierer, wie Pelletiertrommel oder Pelletierteller durchgeführt werden. Zusätzlich kann vor den Pelletierer ein Mischer oder Agglomerator vorgeschaltet werden.

Die Zugabe der Einsatzstoffe feinteilige Silicium-haltige Partikel und Bindemittel kann dabei zusammen oder getrennt voneinander erfolgen, die Zugabe wird hierbei manuell oder automatisiert durchgeführt. Anstatt dem Mischer oder Agglomerator kann das Bindemittel in Teilen oder komplett wahlweise auch dem Pelletierer zugesetzt werden.

Die erhaltenen feuchten Agglomerate weisen vorzugsweise einen Wasser-Gehalt von 8 bis 12 Masse-% auf. Der Wasser-Gehalt kann durch Versetzen der feinteiligen Silicium-haltigen Partikel oder des Bindemittels oder der Mischung mit Wasser vor dem Agglomerieren oder beim Agglomerieren oder sowohl vor dem Agglomerieren als auch beim Agglomerieren eingestellt werden.

Die feuchten Agglomerate werden dem Pelletierer entnommen und anschließend getrocknet, beispielsweise in einem Rotationstrockner, um die getrockneten Agglomerate zu erhalten. Dabei kann es bevorzugt sein, die getrockneten Agglomerate einem Klassierungsschritt beispielsweise mittels Sieb oder Sichter zu unterziehen um beispielsweise genauere Partikelgrößenverteilungen einzustellen, wobei klassierte Agglomerate hergestellt werden. Gegebenenfalls, um die Eigenschaften der getrockneten Agglomerate zu verbessern, ist es angezeigt, bereits die feuchten Agglomerate einem Klassierungsschritt zu unterziehen, bevor sie getrocknet werden. In den Klassierern abgetrennte Anteile werden gegebenenfalls zerkleinert, beispielsweise durch Mahlen oder Brechen, und dem Mischer oder Agglomerator erneut zugesetzt.

Vorzugsweise erfolgt die Trocknung der Agglomerate bei einer Temperatur von 500 bis 1000 °C, insbesondere 700 bis 950 °C für eine Zeitdauer von 5 min bis 24 h, insbesondere 30 min bis 2 h.

Die erfindungsgemäß hergestellten Agglomerate können beispielsweise in folgenden metallurgischen Prozessen eingesetzt werden:
- in der Herstellung von Silicium technischer Qualität (Reinheit 95 bis 99 Masse-% Si; beispielsweise sogenanntes metallurgisches Silicium mit einer Reinheit *von* 97-99 Masse-% Si])
- in der Herstellung von Silicium mit einer Reinheit von >99 Masse-% Si (beispielsweise UMG-Si [upgraded metallurgical grade], SG-Si [solar grade], EG-Si [electronic grade])
- in der Herstellung von Silicium für Akkumulator-Anwendungen, bspw. als Anodenmaterial in Lithium-Ionen-Akkumulatoren bzw. Lithium-Silicium Batterien
- in der Herstellung von sog. Ferrosilicium (Legierungen aus ca. 45-90 Masse-% Si und ca. 10-55 Masse-% Fe)
- in der Herstellung von sog. "Calciumsilicium" (Calciumdisilicid CaSi₂, ca. 60 Masse-% Si und ca. 40 Masse-% Ca)
- in der Herstellung von Stahl (Verwendung als Desoxidationsmittel)
- in der Herstellung von Legierungen (bpsw. Verwendung als Legierungsbestandteil von Gusslegierungen des Aluminiums, Kupfers, Titans und Eisens)

Die erfindungsgemäß hergestellten Agglomerate werden vorzugsweise in Industrieöfen ausgewählt aus der Gruppe Lichtbogenofen, Basic Oxygen Furnace (Linz-Donawitz-Verfahren), Schachtofen (beispielsweise Kupolofen), Induktionsofen und Warmhalte-/Schmelz-/Gießofen eingesetzt. Zudem werden die Agglomerate insbesondere in Behältnissen eingesetzt, die Metallschmelzen enthalten. Die Agglomerate werden dabei als Reduktionsmittel, Schlackebildner oder Legierungsmittel bzw. Siliciummetall-Quelle eingesetzt.

Der Partikelgrößenparameter d₅₀ der getrockneten Agglomerate beträgt vorzugsweise 1 bis 100 mm, besonders bevorzugt 2 bis 50 mm, insbesondere 5 bis 30 mm. Die Porosität der getrockneten Agglomerate beträgt vorzugsweise 0,1 bis 40, besonders bevorzugt 0,15 bis 30, insbesondere 0,2 bis 25. Der Wasser-Gehalt der getrockneten Agglomerate beträgt vorzugsweise 0,05 bis 1 Masse-%, besonders bevorzugt 0,1 bis 0,50 Masse-%.

Die Druckfestigkeit der getrockneten Agglomerate, d.h. maximale Beladung beträgt vorzugsweise 1500 bis 4000 N, besonders bevorzugt 2000 bis 3500 N.

Die Bestimmung der physikalischen und chemischen Eigenschaften des Bindemittels sowie der Zusammensetzung und der entsprechenden Gewichtsanteile der Bestandteile erfolgt gemäß den Normen NS-EN 13263-1, NS-EN 13263-2 und NS-EN 196-6.

Die Bestimmung von Silicium-Gehalten kann beispielsweise über Röntgenfluoreszenzanalyse (RFA), ICP-basierte Analysemethoden (ICP-MS, ICP-OES) oder Atomabsorptionsspektrometrie (AAS) erfolgen.

Für Mischungen partikulärer Stoffe, die Korndurchmesser von überwiegend > 0,1 mm aufweisen, werden üblicherweise Siebanalysen durchgeführt, um die Partikelmischung zu charakterisieren. Die Bestimmung der Korngrößenverteilung mittels Siebanalyse erfolgt nach DIN 66165. Eine Berechnung von mittleren Partikelgrößen/-durchmessern aus Partikelgrößenverteilungen kann nach DIN ISO 9276-2 erfolgen.

Für Mischungen partikulärer Stoffe, die Korndurchmesser von überwiegend < 0,1 mm aufweisen, erfolgt die Bestimmung von Partikelgrößenverteilungen nach ISO 13320 (Laserbeugung) und/oder ISO 13322 (Bildanalyse). Eine Berechnung von mittleren Partikelgrößen/-durchmessern aus Partikelgrößenverteilungen kann nach DIN ISO 9276-2 erfolgen.

Die Gesamtporosität eines Stoffes setzt sich zusammen aus der Summe der Hohlräume, die untereinander und mit der Umgebung in Verbindung stehen (offene Porosität; hier, in der vorliegenden Erfindung: effektive Porosität) und den nicht miteinander verbundenen Hohlräumen (geschlossene Porosität). Die Porositätsmessungen werden nach dem Archimedischen Prinzip und wird gemäß ASTM C373-88 durchgeführt. Ferner kann die Porosität eines Materials durch Berechnung aus der absoluten und der apparenten Dichte erfolgen. Die absolute und die apparente Dichte können mittels Gewichtsmessung und Volumenmessung mittels Gaspyknometern bestimmt werden. Die Bestimmung der Dichte fester Stoffe wird in DIN 66137-2:2019-03 beschrieben.

### Beispiel

Der nachfolgend beschriebene Versuch wurde an Umgebungsluft und Raumtemperatur (20°C) durchgeführt.

In einem Mischbehälter wird ein feinteiliges Silicium-haltiges Pelletiergut (d₅₀ von 15 µm; Siliciummetall-Gehalt von 50 Masse- %) mit einem Bindemittel (96,6 Masse-% SiO₂, 0,08 Masse-% Fe₂O₃, 0,18 Masse-% Al₂O₃, 0,34 Masse-% CaO, 0,22 Masse-% MgO, 0,45 Masse-% K₂O, 0,48 Masse-% Na₂O, 0,01 Masse-% Cl, 1,2 Masse-% C, 0,04 Masse-% P₂O₅, 0,25 Masse-% SO₃, 0,21 Masse-% H₂O; LOI von 1,3 Masse-%; spezifische Oberfläche von 27,6 m²/g) in einem Massenverhältnis von 90/10 gemischt und anschließend in eine Pelletiertrommel mit einem Durchmesser von 0,7 m überführt, wobei die Mischung bei Zugabe ein Gesamtgewicht von 1 kg aufweist. Während des Agglomerationsprozesses in der manuell betriebenen, rotierenden Pelletiertrommel wird die Mischung mit Wasser durch Verdüsen desselbigen benetzt und feucht gehalten. Wenn die Agglomerate eine Größe von 20 bis 25 mm erreicht haben und einen Wasser-Gehalt von 10 Masse-% aufweisen, wird der Aufbauagglomerationsprozess beendet. Die so erhaltenen feuchten Agglomerate werden in einen Rotationstrockner überführt, wobei der Trockner mit einer Temperaturrampe von 30 °C/min aufgeheizt wird, bis eine Temperatur von 900 °C erreicht ist. Letztere wird für 30 min gehalten. Hiernach werden die getrockneten, Agglomerate erhalten und weisen die folgenden Eigenschaften auf: Partikelgrößenparameter d₅₀ von 22 mm, Porosität von 0,24, Wasser-Gehalt von 0,15 Masse-%, Druckfestigkeit von 2350 N.

## Patentansprüche

1. Verfahren zur Herstellung von Siliciummetall-enthaltenden Agglomeraten, bei dem eine Mischung aus feinteiligen Siliciummetall-haltigen Partikeln, die einen Partikelgrößenparameter d₅₀ von höchstens 250 µm und im trockenen Zustand einen Siliciummetall-Gehalt von mindestens 10 Masse-% aufweisen,
Bindemittel, das 90 bis 98 Masse-% Siliciumdioxid enthält, sowie eine spezifische Oberfläche von 15 bis 35 m²/g aufweist und
Wasser,
wobei das Massenverhältnis zwischen feinteiligen Siliciummetall-haltigen Partikeln und Bindemittel in der Mischung von 80/20 bis 99/1 beträgt,
agglomeriert wird,
wobei die hierbei erhaltenen feuchten Agglomerate einen Wasser-Gehalt von 5 bis 15 Masse-% aufweisen,
und die Agglomerate anschließend getrocknet werden.

2. Verfahren nach Anspruch 1 bei dem die feinteiligen Siliciummetall-haltigen Partikel Siliciumreste sind, die ausgewählt werden aus Nebenprodukten oder Abfällen der Silicium-herstellenden oder -verarbeitenden Industrien.

3. Verfahren nach einem oder mehreren der voranstehenden Ansprüche, bei dem das Bindemittel mit einem Gewichtsanteil von 2 bis 10 Masse-%, bezogen auf das Gesamtgewicht des Bindemittels, zumindest eine Verbindung ausgewählt aus der Gruppe Al₂O₃, Fe₂O₃, CaO, MgO, Na₂O, K₂O, Cl, C, P₂O₅, SO₃, H₂O oder Kombinationen daraus umfasst.

4. Verfahren nach einem oder mehreren der voranstehenden Ansprüche, bei dem das Bindemittel Microsilica ist, welches als Nebenprodukt bei der Herstellung von Silicium technischer Qualität mittels carbothermischer Reduktion von Siliciumdioxid in elektrischen Öfen anfällt.

5. Verfahren nach einem oder mehreren der voranstehenden Ansprüche, bei dem der Wasser-Gehalt der feuchten Agglomerate durch Versetzen der feinteiligen Silicium-haltigen Partikel oder des Bindemittels oder der Mischung mit Wasser beim Agglomerieren eingestellt wird.

6. Verfahren nach einem oder mehreren der voranstehenden Ansprüche, bei dem die Trocknung der Agglomerate bei einer Temperatur von 500 bis 1000 °C erfolgt.

7. Verfahren nach einem oder mehreren der voranstehenden Ansprüche, bei dem der Partikelgrößenparameter d₅₀ der getrockneten Agglomerate 1 bis 100 mm beträgt.

8. Verfahren nach einem oder mehreren der voranstehenden Ansprüche, bei dem der Wasser-Gehalt der getrockneten Agglomerate 0,05 bis 1 Masse-% beträgt.

## Claims

1. A process for producing silicon metal-containing agglomerates, wherein a mixture of finely divided silicon metal-containing particles having a particle size parameter d₅₀ of not more than 250 µm and in the dry state a silicon metal content of at least 10% by mass,
binder containing 90% to 98% by mass of silicon dioxide and having a specific surface area of 15 to 35 m²/g and water,
wherein the mass ratio between finely divided silicon metal-containing particles and binder in the mixture is from 80/20 to 99/1,
is agglomerated,
wherein the resulting moist agglomerates have a water content of 5% to 15% by mass
and the agglomerates are subsequently dried.

2. The process as claimed in claim 1, wherein the finely divided silicon metal-containing particles are silicon residues selected from byproducts or wastes of the silicon-producing or -processing industries.

3. The process as claimed in one or more of the preceding claims, wherein the binder comprises a weight fraction of 2% to 10% by mass, based on the total weight of the binder, of at least one compound selected from the group of Al₂O₃, Fe₂O₃, CaO, MgO, Na₂O, K₂O, Cl, C, P₂O₅, SO₃, H₂O or combinations thereof.

4. The process as claimed in one or more of the preceding claims, wherein the binder is microsilica which is generated as a byproduct in the production of industrial quality silicon by carbothermic reduction of silicon dioxide in electric furnaces.

5. The process as claimed in one or more of the preceding claims, wherein the water content of the moist agglomerates is adjusted by admixing the finely divided silicon-containing particles or the binder or the mixture with water during agglomeration.

6. The process as claimed in one or more of the preceding claims, wherein the drying of the agglomerates is carried out at a temperature of 500°C to 1000°C.

7. The process as claimed in one or more of the preceding claims, wherein the particle size parameter d₅₀ of the dried agglomerates is 1 to 100 mm.

8. The process as claimed in one or more of the preceding claims, wherein the water content of the dried agglomerates is 0.05% to 1% by mass.

## Revendications

1. Procédé de préparation d'agglomérats contenant du silicium métallique, dans lequel on agglomère un mélange de particules finement divisées contenant du silicium métallique, qui présentent un paramètre granulométrique d₅₀ d'au plus 250 µm et, à l'état sec, présentent une teneur en silicium métallique d'au moins 10 % en masse,
un liant, qui contient 90 à 98 % en masse de dioxyde de silicium, et présente aussi une aire spécifique de 15 à 35 m²/g, et
de l'eau,
le rapport en masse des particules finement divisées contenant du silicium métallique au liant dans le mélange étant de 80/20 à 99/1,
les agglomérats humides ainsi obtenus présentant une teneur en eau de 5 à 15 % en masse,
les agglomérats étant ensuite séchés.

2. Procédé selon la revendication 1, dans lequel les particules finement divisées contenant du silicium métallique sont des résidus de silicium qui sont choisis parmi les sous-produits ou déchets des industries de fabrication ou de transformation du silicium.

3. Procédé selon l'une ou plusieurs des revendications précédentes, dans lequel le liant comprend, avec une teneur en poids de 2 à 10 % en masse par rapport au poids total du liant, au moins un composé choisi dans le groupe Al₂O₃, Fe₂O₃, CaO, MgO, Na₂O, K₂O, Cl, C, P₂O₅, SO₃, H₂O ou les combinaisons de ceux-ci.

4. Procédé selon l'une ou plusieurs des revendications précédentes, dans lequel le liant est une microsilice, qui est obtenue en tant que sous-produit lors de la fabrication d'un silicium de qualité technique, par réduction carbothermique de dioxyde de silicium dans des fours électriques.

5. Procédé selon l'une ou plusieurs des revendications précédentes, dans lequel on ajuste lors de l'agglomération la teneur en eau des agglomérats humides par addition des particules finement divisées contenant du silicium ou du liant ou du mélange avec de l'eau.

6. Procédé selon l'une ou plusieurs des revendications précédentes, dans lequel le séchage des agglomérats a lieu à une température de 500 à 1 000 °C.

7. Procédé selon l'une ou plusieurs des revendications précédentes, dans lequel le paramètre granulométrique d₅₀ des agglomérats séchés est de 1 à 100 mm.

8. Procédé selon l'une ou plusieurs des revendications précédentes, dans lequel la teneur en eau des agglomérats séchés est de 0,05 à 1 % en masse.
